# EUROPEAN PATENT APPLICATION

(11) **EP 1 860 878 A2**
(43) Date of publication of application: **28.11.2007**
(21) Application number: 07108677.1
(22) Date of filing: 22.05.2007
(51) Int. Cl.: H04N 7/16

(54) **Broadcast receiver, data structure and method for providing diagnostic information**

(30) Priority: 23.05.2006 KR 20060046266
(71) Applicant: LG ELECTRONICS INC., Seoul, 150-721 (KR)
(72) Inventor: Cha, Sang Hoon, Seoul 120-830 (KR); Park, Tae Jin, Sujeong-gu, Seongnam-si, Gyeonggi-do 461-824 (KR); Kim, Bong Seok, Gangnam-gu, Seoul 135-858 (KR)
(74) Representative: Cabinet Plasseraud

(57) **Abstract**

A host includes a controller configured to receive a request external to the host, wherein the request is for diagnostic information associated with central processing unit (CPU) for an application. The controller is further configured to collect the requested diagnostic information.

## Description

This application claims the benefit of the Korean Patent Application No. 10-2006-0046266, filed on May 23, 2006, which is hereby incorporated by reference as if fully set forth herein.

### BACKGROUND

### Field of the Disclosure

The present disclosure relates to content broadcasting technology, and more particularly, to a broadcast receiver, data structure and method for providing diagnostic information.

### Background

Generally, a content broadcast system may include a broadcasting station transmitting contents through a wired (e.g., telephone or cable) or wireless (e.g., cellular or satellite) network and at least one host, such as a broadcast receiver, that receives the contents. The broadcast receiver may include a communication interface. Where the broadcast receiver does not have a communication interface, a communication card may be used by the broadcast receiver in order to interface with the broadcasting station.

In the case of cable broadcasting, a cable broadcasting station may be a system operator (SO) headend or a multiple system operator (MSO) headend. The SO may be a unified wire broadcast provider (i.e., local cable TV broadcast provider) and the MSO may be several SOs grouped together.

A cable broadcast receiver may be a digital built-in TV, a digital ready TV, etc. The cable broadcast receiver may employ an open cable system and may use a cablecard or a point of deployment (POD) module that may include a conditional access (CA) system. Alternatively, the cable broadcast receiver may have a built-in module that is a functional equivalent of the cablecard. In this instance, the cable broadcast receiver may receive a CA system, in a form of a software, that is downloadable from the SO or MSO and stored in a memory of the cable broadcast receiver. The downloadable software is usually referred to as download conditional access system (DCAS). As such, the cable broadcast receiver may have a configuration that may or may not require a separate cablecard.

Where a cablecard is required, the cablecard may use a personal computer memory card international association (PCMCIA) standard in order to interface with the cable broadcast receiver. The cablecard may be inserted in a slot provided at the cable broadcast receiver.

Meanwhile, a host may receive and process an Open Cable Application Platform (OCAP)-based service provided by a headend.

That is, the host must download an OCAP-Java (OCAP-J) application, such as an Electronic Program Guide (EPG) and a monitor application transmitted from a headend located at a remote place through a cable network, and drive the application on its system.

Accordingly, the host includes a central processing unit (CPU) having capability suitable for driving a downloadable application as determined at the time of producing a product or a CPU having suitable capability by the agreement between the headend and a manufacturer.

However, since the headend does not have a limitation in a service which can be provided in an OCAP environment, only the monitor application, the EPG containing only basic functions, and an impulse pay-per-view (IPPV) service was provided when the service starts to be provided, but, in the future, a variety of services will be provided after an OCAP service environment is stabilized.

Accordingly, as a service provided by the headend gradually becomes complicated and various, the capability of the CPU required for normally driving the OCAP-J application must be gradually improved. **SUMMARY**

Accordingly, the present disclosure is directed to broadcast receivers, data structures and methods for providing diagnostic information that substantially obviate one or more problems described above.

For example, the disclosure may disclose broadcast receivers and methods for providing diagnostic information, by which central processing unit (CPU) status information of a host may be forwarded to a headend.

The disclosure may disclose a diagnostic information data structure, by which diagnostic information for a CPU status of a broadcast receiver may be transmitted/received.

Advantages, objects, and features of the invention in part may become apparent in the description which follows and in part may become apparent to those having ordinary skill in the art upon examination of the following or may be learned from practice of the invention. The objectives and other advantages of the various embodiments of the invention may be realized and attained by the structures and processes described in the written description, in the claims, and in the appended drawings.

To achieve these objects and other advantages and in accordance with the purpose of the invention, as embodied and broadly described herein, A host includes a host controller configured to receive a request external to the host, wherein the request is for diagnostic information associated with CPU for an application. The host controller is further configured to collect the requested diagnostic information.

In another aspect, a communication device configured to communicate with a host, the communication device includes a controller configured to receive a request external to the communication device, wherein the request is for diagnostic information associated with CPU for an application. The controller is further configured to request the diagnostic information from the host using set value.

In another aspect, a method includes receiving a request external to a host, wherein the request is for diagnostic information associated with CPU for an application; collecting the requested diagnostic information in accordance with the request; and forwarding the collected diagnostic information.

In yet another aspect, a method includes requesting diagnostic information associated with CPU for an application; receiving the diagnostic information in accordance with the request; and performing at least one of forwarding the diagnostic information and causing the diagnostic information to be displayed.

In a further aspect, a data structure includes information defining a capability of CPU for an application.

It is to be understood that both the foregoing general description and the following detailed description are exemplary and explanatory and should not be construed as limiting the scope of the claims.

### BRIEF DESCRIPTION OF THE DRAWINGS

The accompanying drawings, which are included to provide a further understanding of the disclosure are incorporated in and constitute a part of this application. The drawings together with the description serve to explain the principle of the invention. In the drawings:

FIG. 1 is an exemplary diagram of a cable broadcast network;

FIG. 2 is a diagram of an example of OCAP_CPU_status_report () object syntax;

FIG. 3 is a diagram of an example of exchanging protocol message generic diagnostic protocol;

FIG. 4 is a diagram of an example of identifying diagnostic information to diagnose status of host's CPU;

FIG. 5 is a diagram of an example of constructing syntax to transport status information from host to headend as diagnostic response protocol;

FIGs. 6A and 6B are diagrams of examples of CPU_information_report () object syntax;

FIG. 7 is a block diagram of an exemplary cable broadcast receiver; and

FIG. 8 is an exemplary flowchart of a method of transmitting CPU status diagnostic information.

### DETAILED DESCRIPTION

Reference will now be made in detail to broadcast receivers, data structures and methods for providing diagnostic information according to the various embodiments, examples of which are illustrated in the accompanying drawings. Wherever possible, the same reference numbers will be used throughout the drawings to refer to the same or like parts for simplicity. In this case, Open Cable Application Platform (OCAP) is taken as an example of a data broadcasting platform in describing the various disclosed embodiments.

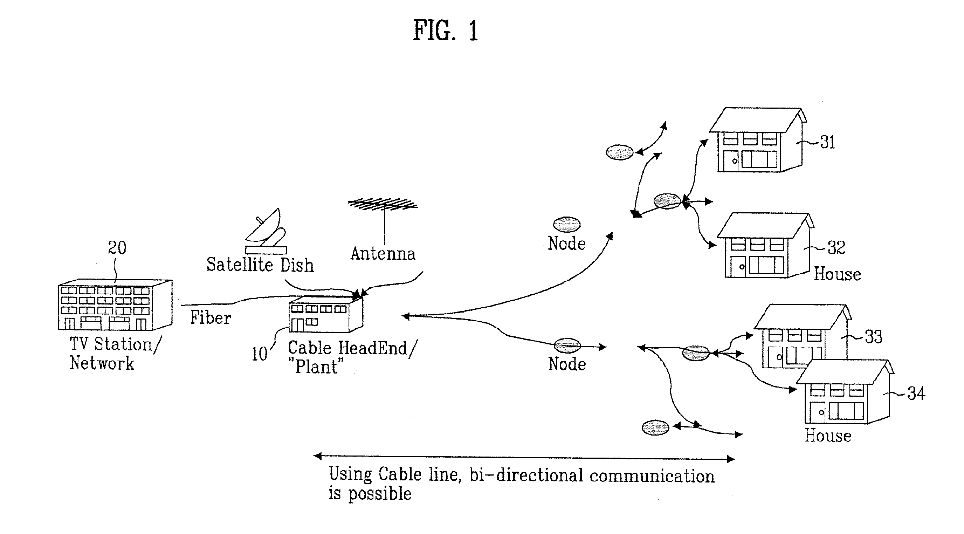

First, a broadcast network in OCAP will be described. FIG. 1 is an exemplary diagram illustrating a cable broadcast network. Referring to FIG. 1, a cable headend or plant may receive cable broadcast signals via various communication networks from, for example, a television broadcasting station. The cable headend may deliver cable broadcast to a cable broadcast receiver, which may include a cablecard, via a network including nodes.

The cable broadcast receiver may communicate bi-directionally with the cable headend. In this case, the transmission/reception of data is achieved via a cable network capable of transferring data bi-directionally.

The cable broadcast receiver may be connected to various devices, such as a digital video disc (DVD) player, a digicam, a set-top box and the like. As services provided by the cable headend increase, the broadcast receiver may experience shortage of memory required for implementing the services.

A cable broadcast receiver may be configured to communicate bi-directionally with a cable headend via a cable network infrastructure, as shown in FIG. 1, enabling data to be transferred bi-directionally. The cable broadcast receiver may download applications, for example, a monitor application such as an execution management application, an Electronic Program Guide (EPG), an OCAP-J application for a game application and the like, and data.

Services offered by the cable headend are continuously increasing. So, a host should be able to support the increasing services. For instance, the host may need to secure sufficient central processing unit (CPU) capability in order to support the increasing services to continuously operate at the host.

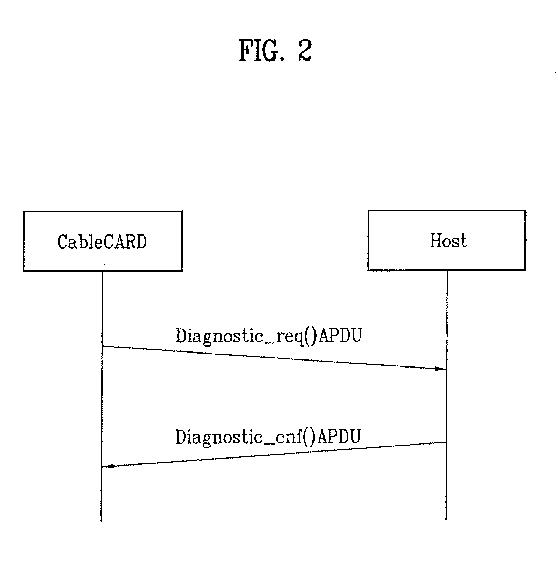

FIG. 2 is a diagram of exemplary protocols used to request and to receive diagnostic information of a host. In this implementation, a cablecard receives from a cable headend or a user a request for diagnostic information of the host in which the cablecard may be inserted. Referring to FIG. 2, the cablecard may receive a request for diagnostic information of the host from a cable headend or user. The cablecard may forward the request to the host according to a predetermined protocol.

If the host receives the request for diagnostic information, the host collects diagnostic information in accordance with the request. The host may then forward the collected diagnostic information to the cablecard according to a predetermined protocol.

The predetermined protocol may be Generic Diagnostic Protocol, which is used in Open Cable, for example. The Generic Diagnostic Protocol is a protocol that may be used to monitor in real time various types of information associated with the host and devices connected to the host by a local entity (e.g., a user) or remote entity (e.g., a cable MSO). For example, by using this protocol, the cablecard may request for diagnostic information of the host using a diagnostic request protocol and the host may forward the diagnostic information to the cablecard using a diagnostic confirmation protocol.

Thus, in FIG. 2, if the protocol used between the cablecard and the host is Generic Diagnostic Protocol, then the diagnostic request protocol and the diagnostic response protocol may be represented by diagnostic_req() application protocol data unit (APDU) and diagnostic_cnf() APDU, respectively, for example. Thus, if the host collects and forwards its diagnostic information to the cablecard according to the diagnostic response protocol, then the cablecard may forward the received diagnostic information to the cable headend located in a remote place or may output it to a screen of the host through a cable menu interface implemented between the cablecard and the host. In this case, the cable menu interface may transmit a format of hypertext markup language (HTML) file or the like to the host, which causes a cable menu to be displayed on a screen, where the user may select a diagnostic item from the cable menu. In this case, the cable menu interface may generate a user interface that enables the user to request and to receive diagnostic information.

As mentioned above, the Generic Diagnostic Protocol is an example of one protocol that may be used. However, other protocols may be used to request and receive diagnostic information from the host. For example, a diagnostic information protocol defined by various broadcast specifications may be used. In fact, protocols that do not transport diagnostic information may be modified to transport such information. Thus, the Generic Diagnostic Protocol is one example of a protocol that may be used to transport diagnostic information.

Hereinafter, when diagnostic information is transmitted/received between the host and the cablecard using the Generic Diagnostic Protocol, the diagnostic information according to the present disclosure will be described.

The diagnostic information includes status information of a CPU which is previously included in the host. Accordingly, a diagnostic identification (ID) of the status information of the CPU of the host should be contained in the Generic Diagnostic Protocol used for transmitting/receiving the diagnostic information between the host and the cablecard as one of the diagnostic information.

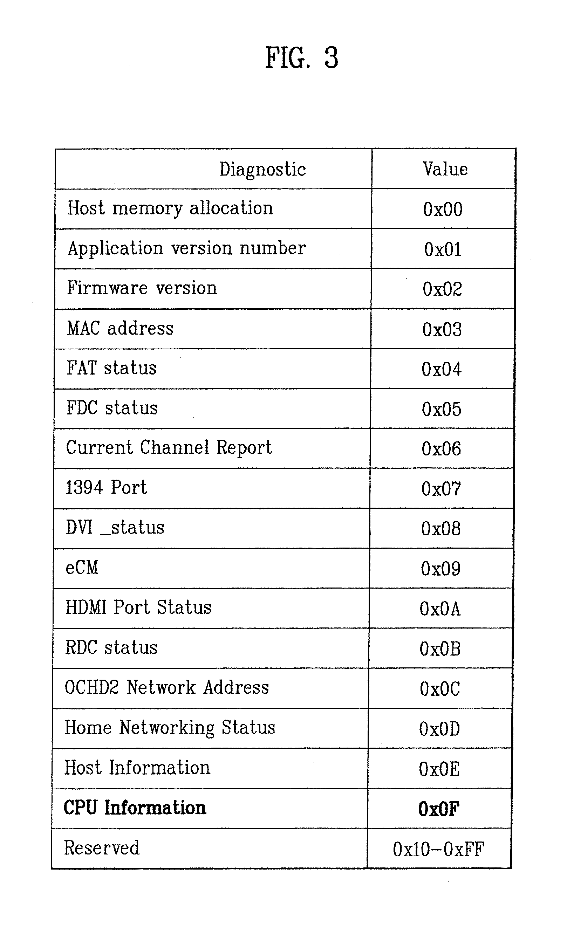

FIG. 3 is a diagram of an exemplary table that may contain various available diagnostic information and corresponding values. Referring to FIG. 3, the cablecard may make a request for diagnostic information by setting a diagnostic ID value to '0x0F.' This value indicates that OCAP application CPU information diagnostic information is being requested. The ID value '0x0F' may be forwarded to the host using the diagnostic request protocol. When the host receives the diagnostic ID value '0x0F', the host collects the requested OCAP application CPU information diagnostic information. The collected diagnostic information may be forwarded to the cablecard using the diagnostic response protocol.

For instance, if the diagnostic ID value is '0x08', it means that the cablecard is making a request for DVI status information to the host. Also, if the diagnostic ID value is '0x0A', the cablecard is requesting that the host to check a status of high definition multimedia interface (HDMI) port. In summary, a plurality of diagnostic IDs may be used to receive various information (eCM, RDS status, OCHD 2 Network Address) from the host.

An interface between a cablecard and a host can be classified as a single-stream cablecard interface or a multi-stream cablecard interface. In the single-stream cablecard interface, a cablecard may descramble a single broadcast stream and a host may process the single broadcast stream. In the multi-stream cablecard interface, a cablecard may descramble a plurality of multiplexed broadcast streams and a host may process a plurality of the broadcast streams.

Thus, a cablecard that descrambles a single-stream may be referred to as an 'S-mode' cablecard and a cablecard that descrambles multi-streams may be referred to as an 'M-mode' cablecard.

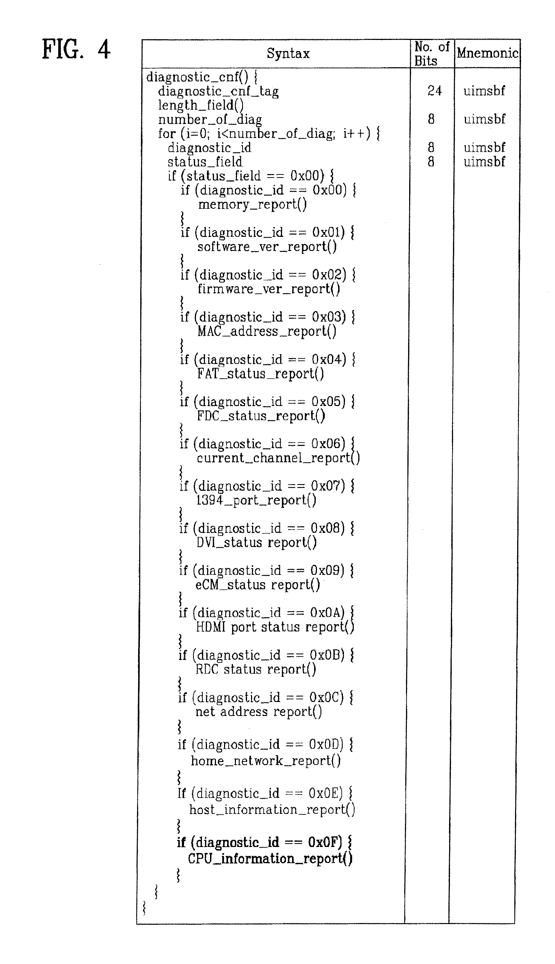

FIG. 4 is a diagram of an example of syntax of a diagnosis response protocol for receiving a single-stream (S-mode) for forwarding diagnostic information.

If a cablecard sets a diagnostic ID value to '0x0F' and forwards a diagnostic request signal to a host, then the host receiving the diagnostic request signal may recognize that diagnostic information associated with CPU information for OCAP application is being requested. The host may collect the requested diagnostic information and then forward the collected result to the cablecard in accordance with the diagnostic response protocol.

When the cablecard receives the diagnostic information, the cablecard may parse for a number of diagnostic contents (number_of_diag) included in the diagnostic information. The cablecard may parse OCAP CPU information report() object having the diagnostic ID value set to '0x0F'. The cablecard may then forward the parsed diagnostic information to the cable headend.

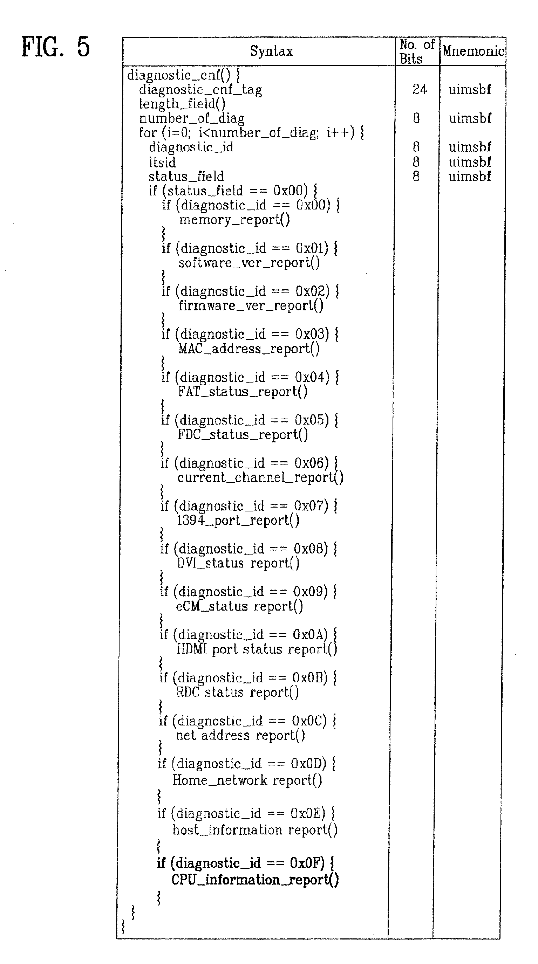

FIG. 5 is a diagram of an example of a syntax of a diagnosis response protocol, which a cable broadcast receiver may receive and multiplex a plurality of broadcast streams (M-mode) in diagnostic information according to one embodiment of the present disclosure.

A syntax shown in FIG. 5 may differ from the syntax shown in FIG. 4 in that there may be a value ID for each of a plurality of multiplexed streams. Thus, a cablecard may obtain status diagnostic information of a CPU in a manner of receiving status diagnostic information of a CPU collected by a host and parsing OCAP_CPU_information_report() having a diagnostic ID set to 'OxOF'.

Diagnostic information according to one embodiment of the present implementation may include capability information of CPU for OCAP application such as a downloadable application, data and the like.

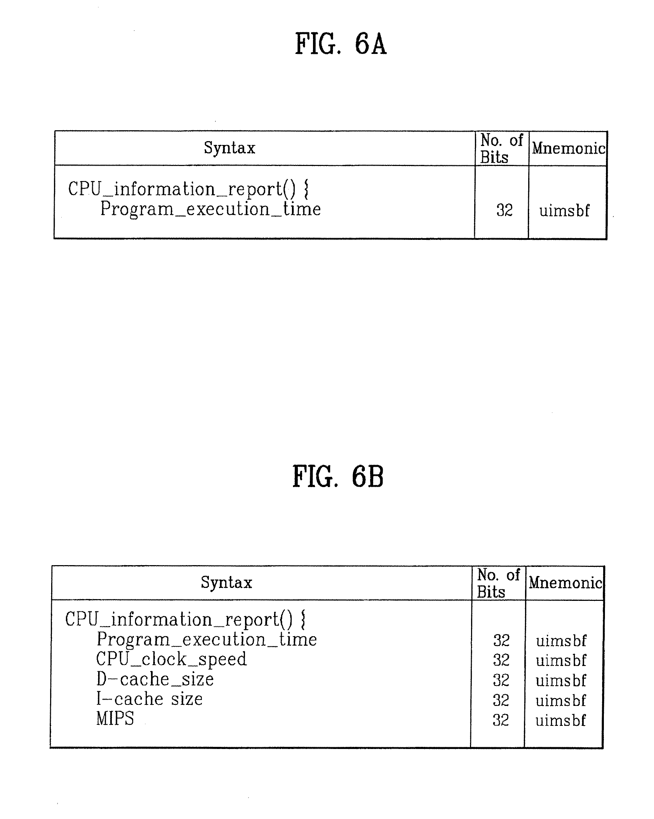

FIGs. 6A and 6B are diagrams of examples of OCAP CPU information report() object syntax included in the exemplary syntax shown in FIG. 4 or FIG. 5. An example of syntax for a cablecard to parse a diagnostic response protocol in a diagnostic information transmitting method according to one embodiment of the present disclosure is explained with reference to FIGs. 6A and 6B as follows.

FIGs. 6A and 6B are diagrams of examples of "CPU_information report()" object syntax according to the present disclosure. At this time, the status information of the CPU is information about the capability of the CPU.

In the present disclosure, for example, the "CPU_information_report ()" object syntax indicating the capability of the CPU will be described. The object syntax may be variously defined to indicate the capability of the CPU, but, in the present disclosure, for example, two examples will be described.

First, FIG. 6A will be described.

A "program_execution_time" field indicates a program execution time. At this time, the program execution time indicates a result of a time for executing a specific benchmarking program on the CPU of the host. The result is the benchmarking program execution time and the unit thereof is represented by milliseconds (ms). That is, the capability of the CPU included in the host can be determined by the benchmarking program execution time.

In association with the program execution time, the headend implements a benchmark OCAP-J application for measuring the capability of the CPU of the host. That is, the headend allows hosts connected through the cable network to download the benchmark application, to execute the benchmark application, and to store the benchmarked result.

In order to store the benchmarked result, the cablcard transmits diagnostic_req () APDU containing the diagnostic ID of "CPU_information_report ()" to each host. When the diagnostic ID of the "CPU_information_report ()" is included in the diagnostic_req () APDU, each host obtains the benchmarked result from the OCAP-J application and includes the benchmarked result in the "CPU_information_report()" object.

The host includes the object in the diagnostic_cnf() APDU and transmits it to a cablecard. The cablecard transmits the information to a management server of the headend located at a remote place.

Alternatively, the headend may provide a benchmarking sample code for measuring the CPU capability of the host to a host vendor. That is, the host vendor may implement the benchmarking program with the benchmarking sample code at the time of developing the host.

The cablecard transmits the diagnostic_req () APDU containing the diagnostic ID of the "CPU_information_report ()" to the host. When the diagnostic ID of the "CPU information report()" is comprised in the diagnostic_req () APDU, the host executes the benchmarking program and includes the result value in the "CPU_information_report()" object.

The host comprises the object in the diagnostic_cnf() APDU and transmits it to the cablecard. The cablecard transmits the information to the management server of the headend located at the remote place. That is, the host may provide the headend with the capability of the CPU included in the host using the benchmarking program included in the host or the benchmark OCAP-J application which is allowed to be downloaded by the headend at the time of development.

Next, FIG. 6B will be described. A "program_execution_time" field is included similar to FIG. 6A and a "CPU_clock_speed" field, a "D_cache_size" field, and an "I-cache_size" field, and an "MIPS" field may be further comprised.

Next, the fields will be described in detail.

The "CPU_clock_speed" indicates the clock speed of the CPU of the host. At this time, the unit of the clock speed of the CPU of the host may be mega hertz (MHz). The "D_cache_size" field indicates the size of a data cache of the CPU of the host. At this time, the unit of the size of the data cache of the CPU of the host may be Kilobyte (KB). The "I cache size" indicates the size of an instruction cache of the CPU of the host. At this time, the unit of the size of the instruction cache of the CPU of the host may be KB. The "MIPS" field indicates Million Instruction Per Second (MIPS) information of the CPU of the host. At this time, the unit of the MIPS of the CPU of the host may be MIPS.

As described above, when the host receives a diagnostic request for the status information of the CPU capability from the cablecard, the host collects the status information of the CPU capability. The host returns the collected status information of the CPU capability to the cablecard according to a diagnostic response protocol. The cablecard provides the response of the host to the headend located at the remote place. The headend may receive the status information of the CPU capability of the host from the cablecard and properly use the status information. For example, the headend can define and record the status information of the CPU of each host as an application database and manage each host connected through the cable network.

Hereinafter, the management of the status information in the headend in order to use the status information of the CPU of each host transmitted from the cablecard to the headend will be described in detail.

The headend can obtain the status information of the CPU, which has a variety of capabilities and is included in each host, from the cablecard through the above-described process. Accordingly, the headend can previously determine the OCAP-J application which can be driven by each host. The headend can separately define and manage the status information of the CPU capability of each host as the application database, as described above.

As an example of defining and managing the application database, the headend receives the status information of the CPU capability of each host through the cable network and defines a host which is determined to have CPU capability sufficient to drive all OCAP-J applications provided by the headend using the information about the received CPU capability of each host as a 'full OCAP-J Application code image'. In contrast, a host which is determined to have CPU capability insufficient to drive the all OCAP-J applications provided by the headend is defined as a 'light-weight OCAP-J Application code image'.

As a method for forming the 'light-weight OCAP-J Application code image', for example, a method for allowing a host having low capability to normally drive the code image at the sacrifice of the quality of a graphical image for determining the look and feel of the application may be used. Alternatively, a method for deleting a service which requires high CPU capability or a user interface (UI) composed of a graphical image or changing a service which operates for the service or the structure of the UI to reduce the use of the CPU may be used.

Accordingly, the headend receives the status information of the CPU capability of each host connected through the cable network managed by the headend. The headend defines each host on the application server as any one of the 'full OCAP-J Application code image' and the 'light-weight OCAP-J Application code image' using the status information. The headend may include an application database for the above definition.

The headend may select a code image suitable for each host and download an OCAP-J application to each host connected through the cable network, using the information defined in the application database.

When the headend defines the application database, for example, each host is defined as the 'full OCAP-J Application code image' or the 'light-weight OCAP-J Application code image'. However, this does not mean that the application is divided into two steps. That is, the division number of the application database may be proportional to how many times the CPU capabilities of the hosts are explicitly changed in the protocol related to the policy of the headend or how many times the headend and the manufacturer agree with each other with respect to the CPU capability.

The respective status diagnostic information of the CPU capability and the values for the status diagnostic information are exemplary and may be easily modified by those skilled in the art.

As mentioned in the foregoing description, a status of CPU capability for OCAP application may be defined. The cable headend may use the received defined status diagnostic information according to a predetermined specification by having the information transmitted and received between the host and the cablecard and by transmitting the corresponding information to the cable headend from the cablecard. Where the host does not require a cablecard, the host directly bi-directionally communicate with the cable headend.

In various embodiments, the host can use a host diagnostic protocol associated with the aforesaid Generic Diagnostic Protocol.

The host may diagnose status information of its CPU using the host diagnostic protocol and display it to a user. If so, the user may recognize CPU status of the host via a screen. The user may select a service downloadable to the host by comparing it to a size of a service provided by the cable headend. In the corresponding communications between the host and the cable headend, the host obtains the service according to the user's selection to the cable headend using the Generic Diagnostic Protocol, Internet protocol or the like.

Moreover, the above-explained status diagnostic function may be applicable to a satellite broadcast receiver, a terrestrial broadcast receiver, internet protocol television (IPTV) and the like.

In case of the satellite broadcast receiver, the cablecard is replaced by a smart card. In this case, an interface module for external interfacing like the cablecard can be provided externally or internally.

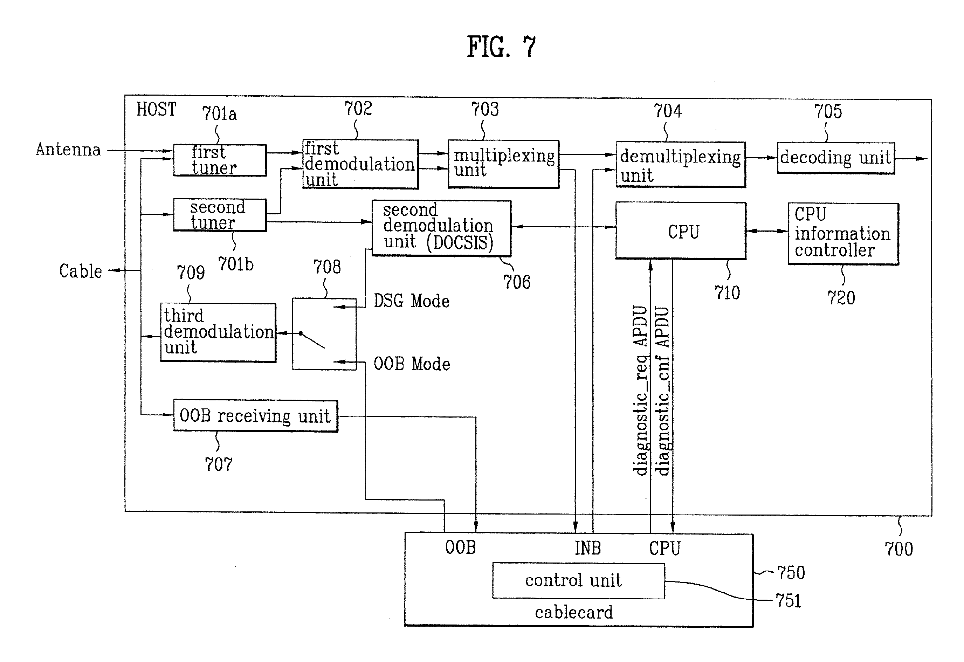

FIG. 7 is a block diagram of an exemplary cable broadcast receiver according to one embodiment of the present invention. An operation of the cable broadcast receiver with reference to FIG. 7 is now described.

Referring to FIG. 7, the cable broadcast receiver 700 may include a cablecard, which may be separately insertable into a slot located at the broadcast receiver 700. In an alternative embodiment, the broadcast receiver may include a built-in module that has a functional equivalent of a cablecard. In this instance, the broadcast receiver does not require a separate cablecard. In general, the broadcast receiver may be capable of receiving a cable broadcast signal only or at least one of broadcast signals of cable broadcasting, terrestrial broadcasting and satellite broadcasting.

Meanwhile, a bi-directional communication system between a cable broadcast receiver and a broadcasting station may be classified into two types. For an uplink service within an open cable, Out-of-Band (OOB) mode or DOCSIS Set-top Gateway (DSG) mode may be available. A viewer may select to view a specific program via a host using one of the two modes. A user may directly participate in a broadcast program or select to view necessary information. And, a data broadcast service may be offered via the OOB or DSG mode.

The OOB mode is a reference that may regulate a transmission specification between a cable broadcasting station (headend) and an inter-sec equipment within a set-top box, cablecard or broadcast receiver. On the other hand, the DSG mode may indicate a transmission mode between a cable modem control system of a cable broadcasting station and a DOCSIS based cable modem within a set-top box, cablecard or broadcast receiver. In this case, the DOCSIS may transmit data using a cable modem.

In this embodiment, a cable broadcast receiver employing hybrid OOB-and-DSG mode may be represented. The cable broadcast receiver 700, as shown in FIG. 7, may include a first tuner 701a, a second tuner 701b, a first demodulation unit 702, a multiplexing unit 703, a demultiplexing unit 704, a decoding unit 705, a second demodulation unit (DOCSIS) 706, an OOB receiving unit 707, a switching unit 708, a third demodulation unit 709, a control unit 710 and a CPU information control unit 720.

The first tuner 701a may tune to a specific channel frequency of a terrestrial audio/video (A/V) broadcast transmitted via an antenna or a cable A/V broadcast transmitted by in-band via a cable and may output it to the first demodulation unit 702.

Terrestrial broadcasting may differ from cable broadcasting. Yet, the first demodulation unit 702 may be capable of performing different demodulations on signals of different modulation schemes, respectively. If a terrestrial A/V broadcast is modulated by vestigial sideband modulation (VSB) to be transmitted and if a cable A/V broadcast is modulated by quadrature amplitude modulation (QAM) to be transmitted, the first demodulation unit 702 may perform a demodulation of a signal by VSB or QAM according to the signal selected by the first tuner 701a.

The signals demodulated by the first demodulation unit 702 may be multiplexed by the demultiplexing unit 703 to output the cable broadcast to the cablecard 750 and the terrestrial broadcast to the demultiplexing unit 704.

In this embodiment shown in FIG. 7, the cablecard 750 may be capable of processing multi-streams. Hence, the cablecard 750 may enable a user to view an input broadcast having at least two streams multiplexed via the cable broadcast receiver 700.

The demultiplexing unit 704 may receive the multiplexed broadcast signal and then demultiplexe the received broadcast signal into a plurality of streams to output. The decoding unit 705 may receive to decode the broadcast signal demultiplexed by the demultiplexing unit 704. If so, a video/audio signal viewable by a user may be output.

The second tuner 701b may tune a specific channel frequency of data broadcasts transmitted via a cable in DSG mode and then output it to the second demodulation unit 706. The second demodulation unit 706 may demodulate the DSG-mode data broadcast and then output the demodulated broadcast signal to the control unit 710. The third tuner 707 may tune a specific channel frequency for downlink data broadcasts transmitted in OOB mode via a cable and then output it to the cablecard 750.

If bi-directional communication between the cable broadcasting station and the cable broadcast receiver is possible, uplink information (e.g., pay-program request, diagnostic information of host, etc.) transmitted from the cable broadcast receiver to the cable broadcasting station may be transmitted in OOB or DSG mode. Hence, the cable broadcast receiver according to one embodiment of the present disclosure may include the switching unit 708 for selecting one of the modes to transmit information.

In the OOB mode, user information or system diagnostic information may be output to the third modulation unit 709 via the cablecard 750 and the switching unit 708. The third demodulation unit 709 may modulate the output signal by quadrature phase shift keying (QPSK) modulation or the like and then transmit the modulated signal to the cable broadcasting station via the cable. If user's broadcast information is transmitted in DSG mode, the information may be output to the control unit 710 and the modulation unit 709 via the switching unit 708 and then may be modulated by the modulation unit 709 according to QAM-16. The modulated signal may be transmitted to the cable broadcasting station via the cable.

In case of receiving a CPU information status diagnostic request from the control unit 710, the CPU information control unit 720 may collect diagnostic information of the CPU and then transmit the collected information to the control unit 710. The control unit 710 may then transmit the collected diagnostic information of the CPU to the cablecard 750.

In this embodiment shown in FIG. 7, if a received broadcast corresponds to a terrestrial broadcast, the cablecard 750 may receive a multi-stream broadcast signal from the multiplexing unit 703. If the broadcast signal is scrambled, the cablecard 750 may descramble the scrambled broadcast signal to enable the corresponding cable broadcast to be normally viewed.

The cablecard 750 may be able to make a request for a status diagnosis of the cable broadcast receiver 700 to the control unit 710 using a status diagnostic request protocol for a host status. The control unit 710 may transmit the status diagnostic information to the CPU information control unit 720. And the CPU information control unit 720 may then collect CPU status diagnostic information.

The control unit 710 may receive the collected CPU status diagnostic information from the CPU information control unit 720 and may then transmit the received CPU status diagnostic information to the cablecard 750 according to a diagnostic response protocol. In FIG. 7, an example of the status diagnostic request protocol is represented as 'diagnostic_req APDU' and an example of the status diagnostic response protocol is represented as 'diagnostic_cnf APDU'.

The cable broadcast receiver 700 may create to transmit status diagnostic information of the CPU 710 to the cablecard 750. If so, the cablecard 750 may transmit the status diagnostic information to the cable headend via the cable network. The cable headend may then be able to recognize the status of the CPU 710 of each cable broadcast receiver.

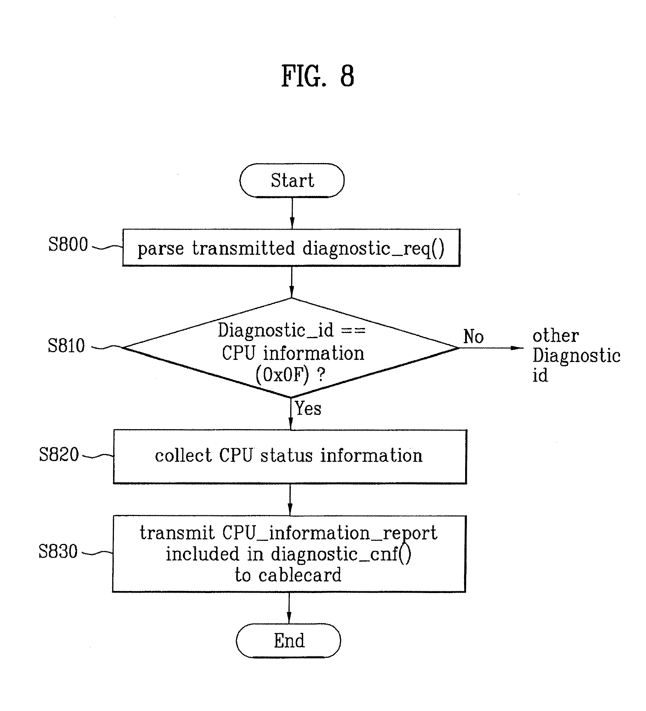

FIG. 8 is an exemplary flowchart of a method of transmitting CPU status diagnostic information according to one embodiment of the present disclosure. Referring to FIG. 8, at step S800, a request for status diagnostic information is received. In case of using the Generic Diagnostic Protocol, the status diagnostic request is transmitted may be 'diagnostic_req() APDU'. The received status diagnostic request is parsed for a value identifying the requested diagnostic information.

Then at step S810, a determination is made whether diagnostic information associated with CPU for OCAP application is being requested. If diagnostic information associated with CPU for OCAP application is not being requested, the process continues to identify other diagnostic information.

If the value of a diagnostic id field of the parsed protocol includes the status diagnostic information of the CPU for OCAP application, the diagnostic information is collected at step S820. Then at step S830, The collected diagnostic information associated with CPU for OCAP application is forwarded to a source requesting the information.

Accordingly, the following advantages may be obtained.

The CPU status diagnostic information associated with each host can be obtained by the cable headend.

If the mode regulated by such a predetermined protocol as the Generic Diagnostic Protocol is extended, compatibility for the transmission information with the cablecard can be secured in the diagnostic information transmitting method.

The present disclosure has been described using digital broadcast receivers in which the broadcast receivers may have terrestrial analog/digital channels, and cable analog/digital channels. With modifications known to those skilled in the art, the present disclosure can be implemented in any terrestrial wired (e.g., telephone) and wireless (e.g., cellular) networks and satellite networks.

It will be appreciated that, in various of the above-disclosed and other features and functions, or alternatives thereof, they may be implemented on a programmed microprocessor, a microcontroller, an integrated circuit element such as ASIC, PLD, PLA, FPGA, or PAL, or the like, a hardwired electronic or logic circuit, or a programmable logic device.

It will be appreciated that the described flow processes, data structures, protocols, or tables can be implemented as a self-consistent sequence of computerized steps that lead to a desired result. These steps can be defined by and/or in one or more computer instructions stored in a computer-readable medium, or can be encompassed using a signal, or provided as software instructions to a processing device. These steps can be performed by a processor executing the instructions that define the steps. Further, the flow process can be performed by a processor executing one or more appropriate programs, by special purpose hardware designed to perform the method, or any combination of such hardware, firmware and software elements.

It will be appreciated that various of the above-disclosed and other features and functions, or alternatives thereof, may be desirably combined into many other different devices or applications. Also, various presently unforeseen or unanticipated alternatives, modifications, variations or improvements therein may be subsequently made by those skilled in the art, and are also intended to be encompassed by the following claims.

## Claims

1. A host comprising:
a host controller configured to receive a request external to the host, wherein the request is for diagnostic information associated with central processing unit (CPU) for an application; and
the host controller further configured to collect the requested diagnostic information.

2. The host of claim 1, wherein the host controller is configured to receive the external request through a communication interface.

3. The host of claim 2, wherein the communication interface includes a cablecard.

4. The host of claim 3, wherein the host is configured to communicate with the cablecard using Generic Diagnostic Protocol.

5. The host of claim 1, wherein the requested diagnostic information contains information indicating capability of the CPU for driving the application.

6. The host of claim 5, wherein the information indicating the capability of the CPU contains information about a program execution time.

7. The host of claim 6, wherein the information indicating the program execution time uses a result of a time for executing a benchmarking program which is previously included in the host.

8. The host of claim 7, wherein the benchmarking program is obtained by downloading an benchmark application for measuring the program execution time from an external source which makes a request for the diagnostic information or implementing a benchmarking sample code provided by the external source.

9. The host of claim 5, wherein the information indicating the capability of the CPU contains information about a clock speed of the CUP.

10. The host of claim 5, wherein the information indicating the capability of the CPU contains information about the size of a D-cache of the CPU.

11. The host of claim 5, wherein the information indicating the capability of the CPU contains information about the size of an instruction cache of the CPU.

12. The host of claim 5, wherein the information indicating the capability of the CPU contains information about million instructions per second (MIPS) of the CPU.

13. The host of claim 5, wherein the information indicating the capability of the CPU contains first information about a program execution time, second information about a clock speed, third information about the size of a D-cache, fourth information about the size of an instruction cache, and fifth information about MIPS of the CPU.

14. The host of claim 6, wherein the information indicating the capability of the CPU further contains at least one of first information about a clock speed, second information about the size of a D-cache, third information about the size of an instruction cache, and fourth information about MIPS of the CPU.

15. The host of claim 1, wherein the application includes an Open Cable Application Platform (OCAP) application.

16. A communication device configured to communicate with a host, the communication device comprising:
a controller configured to receive a request external to the communication device, wherein the request is for diagnostic information associated with central processing unit (CPU) for an application;
the controller further configured to request the diagnostic information from the host using set value.

17. The communication device of claim 16, wherein the controller is configured to receive the requested diagnostic information from the host and the communication device is further configured to parse the requested diagnostic information in accordance with a predetermined protocol.

18. The communication device of claim 16, wherein the controller is configured to forward the parsed diagnostic information to a source requesting the diagnostic information.

19. The communication of claim 16, wherein the application includes an Open Cable Application Platform (OCAP) application.

20. A method comprising the steps of:
receiving a request external to a host, wherein the request is for diagnostic information associated with central processing unit (CPU) for an application;
collecting the requested diagnostic information in accordance with the request; and
forwarding the collected diagnostic information.

21. The method of claim 20 further comprising the step of receiving a version of the application at the host appropriate to the CPU for the application.

22. The method of claim 20 further comprising the steps of:
parsing the request for a value; and
determining, based on the value, whether the request is for the diagnostic information associated with the CPU for an application.

23. A method comprising the steps of:
requesting diagnostic information associated with central processing unit (CPU) for an application;
receiving the diagnostic information in accordance with the request; and
performing at least one of forwarding the diagnostic information and causing the diagnostic information to be displayed.

24. The method of 23 further comprising the step of parsing the requested diagnostic information in accordance with a predetermined protocol.

25. The method of claim 23 further comprising the step of forwarding the parsed diagnostic information to a source requesting the diagnostic information.

26. The method of claim 23 further comprising the step of collecting the requested diagnostic information.

27. The method of claim 23 further comprising the step of receiving a version the application appropriate to the CPU for the application.

28. A data structure comprising:
information defining a capability of central processing unit (CPU) for an application.

29. The data structure of claim 28, wherein the information defining the capability of the CPU contains first information about a program execution time.

30. The data structure of claim 29, wherein the information defining the capability of the CPU further contains at least one of second information about a clock speed, third information about the size of D-cache, fourth information about the size of an I-cache, and fifth information about million instructions per second (MIPS) of the CPU.
